# EUROPEAN PATENT APPLICATION

(11) **EP 4 375 044 A1**
(43) Date of publication of application: **29.05.2024**
(21) Application number: 22845974.9
(22) Date of filing: 21.07.2022
(51) Int. Cl.: B29C 49/06, B29C 49/42, B29C 49/54

(54) **METHOD FOR MANUFACTURING RESIN CONTAINER AND MANUFACTURING DEVICE**

(30) Priority: 21.07.2021 JP 2021120504
(71) Applicant: Nissei ASB Machine Co., Ltd., Komoro-shi, Nagano 384-8585 (JP)
(72) Inventor: OIKE Toshiteru, Komoro-Shi, Nagano 384-8585 (JP); TAKEHANA Daizaburo, Komoro-Shi, Nagano 384-8585 (JP)
(74) Representative: Mewburn Ellis LLP
(86) International application number: PCT/JP2022/028390
(87) International publication number: WO 2023/003041

(57) **Abstract**

A method for manufacturing a resin container having an undercut shape includes accommodating a preform in a cavity mold having an undercut part; inserting a core mold to an inner side of the preform; introducing blow air into the preform through the core mold to blow-mold the preform into a container; gripping a neck part of the container, in which the core mold is disposed on an inner side, with a conveyance chuck from an outer side and sandwiching the neck part of the container with the core mold and the conveyance chuck; and opening the cavity mold. The container in which the neck part is sandwiched between the core mold and the conveyance chuck is released from the undercut part by the opening of the mold.

## Description

### Technical Field

The present invention relates to a method for manufacturing a resin container and a manufacturing apparatus.

### Background Art

Conventionally, for example, in a large-capacity resin container for a water server or the like, a container in which a convex rib is formed on a shoulder part of the container to ensure rigidity of the container is known (see e.g., Patent Literatures 1 and 2). In addition, a method for manufacturing a resin container (back-in-box) for a water server by a one-step type (hot parison) blow-molding apparatus is also known (see e.g., Patent Literature 3).

### Citation List

### Patent Literature

Patent Literature 1: JP 5253085 B1
Patent Literature 2: JP 2010-126224 A
Patent Literature 3: JP 3354279 B1

### Summary of Invention

### Technical Problem

When this type of ribbed container is blow-molded, the convex rib has an undercut shape with respect to the blow split mold. Therefore, if the container is forcibly pulled out from the blow split mold after blow-molding, the container may swing sideways at the time of mold releasing, and contact between the container and the blow split mold, falling off of the container from the conveyance member, and the like may occur, and appropriate carrying-out of the container may be hindered. In particular, in the case of a large-capacity ribbed container, a gap between a large-sized container and a blow split mold at the time of mold releasing tends to be small, so that the above event more easily occurs.

In the one-step type blow-molding apparatus as disclosed in Patent Literature 3, a preform and a container are always supported by way of a neck part (neck part) thereof during molding by a neck mold fixed to a conveyance mechanism (rotary plate). In the one-step type blow-molding apparatus, the neck part of the preform or the container is strongly supported by the neck mold having high rigidity from the outside, and the degree of engagement between the neck part and the neck mold is also high. Therefore, it can be said that the possibility that a defect such as falling off of the container occurs at the time of mold releasing from the blow split mold is relatively low. On the other hand, in a two-step type blow-molding apparatus (e.g., Japanese Patent No. 5503748) or a 1.5-step type blow-molding apparatus (e.g., Japanese Patent No. 6118529) in which a detachment operation with respect to a preform or a container is performed by a chuck member or the like during blow-molding, the possibility that falling off of the container occurs at the time of mold releasing becomes high.

In a case where the container is not appropriately carried out after blow-molding in the manufacturing process of the ribbed container, productivity is greatly reduced in maintenance work such as removal of the container, and the apparatus and the mold are easily damaged. In addition, the above event can be prevented by using a blow split mold having a movable insert, but in this case, the manufacturing cost of the mold increases. Furthermore, in order to produce a container at a high speed, the container needs to be carried out from the blow split mold at a high speed, but in the case of manufacturing a large-capacity ribbed container, defects at the time of carry-out due to falling off or the like are more likely to occur.

Furthermore, in a case where a resin container having a convex rib on a shoulder part is manufactured by a two-step type or 1.5-step type blow-molding apparatus, there is a case where the blow-molding is not performed in a state where the entire neck part of the preform is supported by a neck mold as in the one-step type, and the blow-molding is performed in a state where the preform is supported on the upper surface of the blow-mold in a free state by a protruding portion (support ring or annular flange) of the neck part. In this aspect, when the container is released from the mold, the protrusion of the neck part may rub against the upper surface of the blow-mold and scratches may form on the lower surface of the protrusion. When scratches are formed on the protrusion, the appearance of the container is deteriorated, and a problem may occur in conveyance to a subsequent step.

### Solution to Problem

One aspect of the present invention relates to a method for manufacturing a resin container having an undercut shape, the method including accommodating a preform in a cavity mold having an undercut part; inserting a core mold to an inner side of the preform; introducing blow air into the preform through the core mold to blow-mold the preform into a container; gripping a neck part of the container, in which the core mold is disposed on an inner side, with a conveyance chuck from an outer side and sandwiching the neck part of the container with the core mold and the conveyance chuck; and opening the cavity mold. The container in which the neck part is sandwiched between the core mold and the conveyance chuck is released from the undercut part by the opening of the mold.

### Advantageous Effects of Invention

According to one aspect of the present invention, when the container having the undercut shape is mold released from the blow split mold, the container after released from the mold can be appropriately carried out.

### Brief Description of Drawings

Fig. 1 is a plan view schematically illustrating a configuration of a blow-molding apparatus according to an embodiment.
Fig. 2 is a view schematically illustrating conveyance of preforms in an injection molding unit and a cooling unit.
Fig. 3 is a front view of a blow-molding unit and a container.
Fig. 4 is a plan view illustrating a supporting member in a closed state.
Fig. 5 is a plan view illustrating a supporting member in an open state.
Fig. 6 is a diagram illustrating an operation example of a blow-molding step.
Fig. 7 is a diagram following Fig. 6.
Fig. 8 is a diagram following Fig. 7.
Fig. 9 is a diagram following Fig. 8.
Fig. 10 is a diagram following Fig. 9.
Fig. 11 is a view illustrating a state example when a blow cavity mold is opened.
Fig. 12 is a diagram illustrating a configuration example of a blow cavity mold according to a first modified example.
Fig. 13 is a diagram illustrating a configuration example of a blow-molding unit according to a second modified example.

### Description of Embodiments

Hereinafter, an embodiment of the present invention will be described with reference to the drawings.

In the embodiment, for easy understanding, structures and elements other than the main part of the present invention will be described in a simplified or omitted manner. In the drawings, the same elements are denoted with the same reference numerals. Note that the shape, dimension, and the like of each element illustrated in the drawings are schematically illustrated, and do not indicate the actual shape, dimension, and the like.

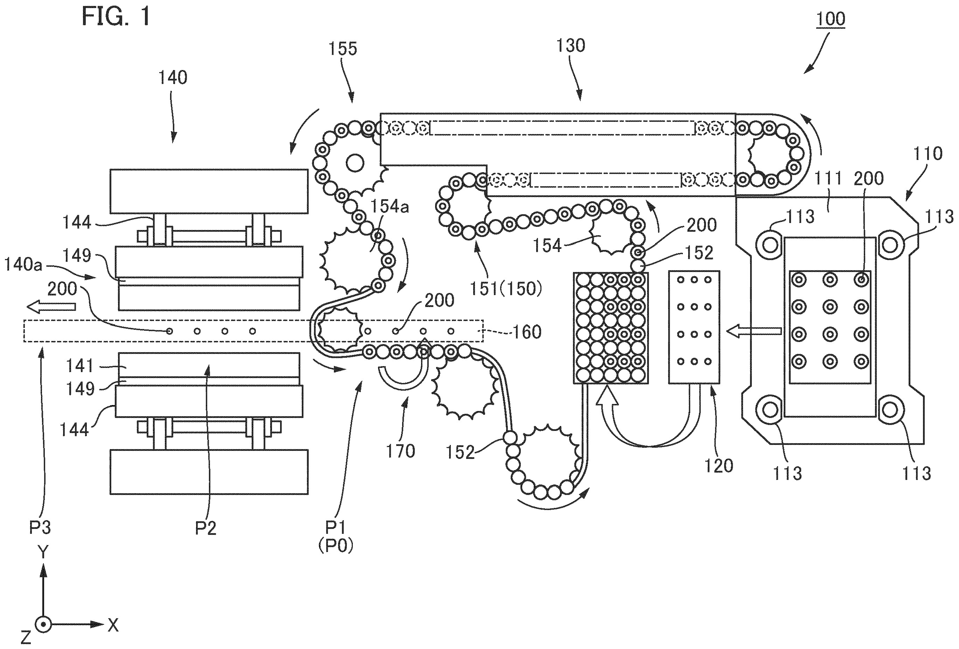

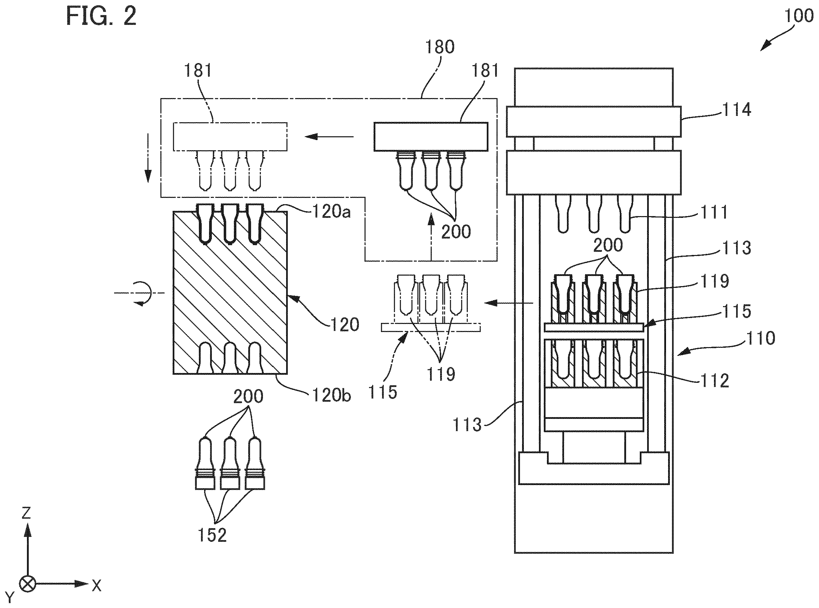

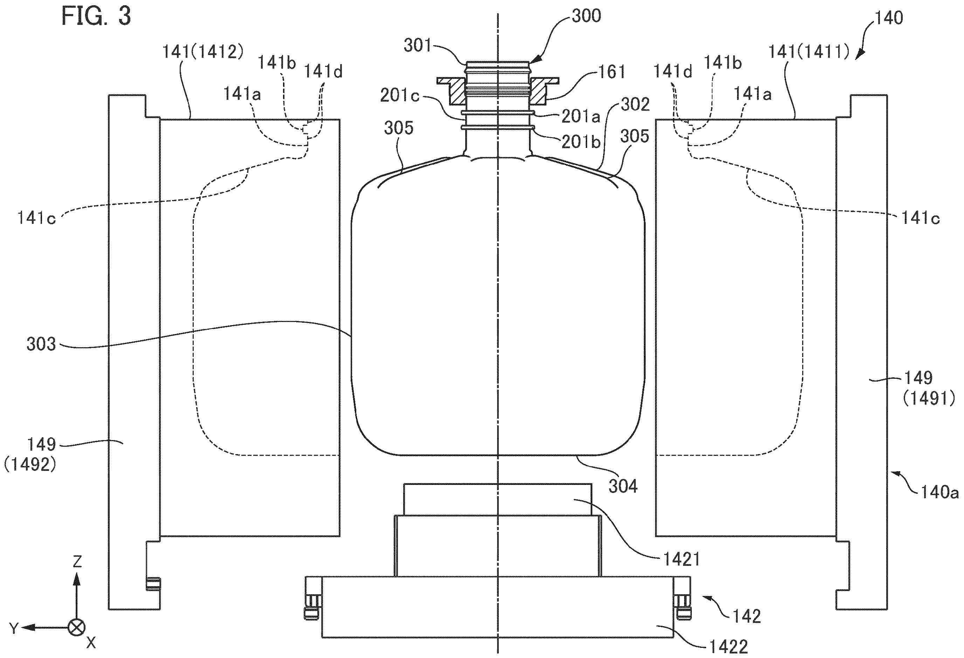

Fig. 1 is a plan view schematically illustrating a configuration of a blow-molding apparatus according to the embodiment. Fig. 2 is a view schematically illustrating conveyance of preforms in an injection molding unit and a cooling unit. Fig. 3 is a front view of a blow-molding unit and a container.

As shown in Fig. 3, a resin container (hereinafter, simply referred to as a container 300) manufactured by a blow-molding apparatus of the present embodiment is, for example, a large-capacity (e.g. 5 to 20 liters, preferably 9 to 15 liters) container (e.g., a back-in-box) used for storing mineral water, edible oil, or the like, and is manufactured by blow-molding a resin preform 200 described later. The entire shape of the container 300 is a prismatic shape with rounded corners, and its cross section is substantially rectangular. The container 300 includes a neck part 301 whose upper side is opened, a shoulder part 302 connected to a lower side of the neck part 301, a body part 303 connected to a lower side of the shoulder part 302, and a bottom part 304 that closes a lower end of the body part 303. The neck part 301 is formed with a cylindrical portion 201c having a circular tubular shape with substantially the same diameter and a flange (described later) protruding in the outer diameter direction from the cylindrical portion 201c. The neck part 301 of the container 300 and the neck part 201 of the preform 200 to be described later have the same shape.

Furthermore, a plurality of convex ribs (convex-shaped ribs protruding in the outer diameter direction of the container) 305 protruding outward from the container 300 and extending in a stripe shape from the neck part 301 toward the body part 303 are formed on the shoulder part of the container 300. Each of the convex ribs 305 is radially arranged around the neck part 301, and has a function of improving rigidity of the container 300 by increasing radial strength of the shoulder part 302.

In addition, the materials of the container 300 and the preform 200 are thermoplastic synthetic resins, and can be appropriately selected depending on the use of the container 300. Specific types of the material include, for example, PET (polyethylene terephthalate), PEN (polyethylene naphthalate), PCTA (polycyclohexanedimethylene terephthalate), Tritan (Tritan (registered trademark): co-polyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin polymer), PMMA (polymethyl methacrylate: acrylic), PLA (polylactic acid), and the like.

On the other hand, in order to manufacture the container 300, the blow-molding apparatus 100 of the present embodiment executes a blow-molding method referred to as a 1.5 stage method having both the advantages of the hot parison method and the cold parison method. In the 1.5 stage blow-molding method, the preform 200 having residual heat from the time of injection molding is blow-molded to manufacture a container, basically in the same manner as the hot parison method (one stage method). However, the cycle of the blow-molding in the 1.5 stage method is set to be shorter than the cycle of the injection molding of the preform 200. The plurality of preforms 200 molded in one injection molding cycle is blow-molded in a plurality of (e.g., three) blow-molding cycles.

As illustrated in Fig. 1, the blow-molding apparatus 100 includes an injection molding unit 110, a cooling unit 120, a heating unit 130, and a blow-molding unit 140.

The blow-molding apparatus 100 further includes a continuous conveyance unit 150 that conveys the preform 200 carried out from the cooling unit 120 to the blow-molding unit 140 through the heating unit 130. The continuous conveyance unit 150 continuously and repeatedly conveys a conveyance jig 152 holding the preform 200 along a loop-shaped conveyance line 151 having a plurality of curved portions.

The injection molding unit 110 performs injection molding of the preform 200 which is a resin molded article.

As illustrated in Fig. 2, the injection molding unit 110 includes a core mold 111 disposed on the upper side, a cavity mold 112 disposed on the lower side, and a clamping mechanism 114 that clamps the core mold 111 and the cavity mold 112 with tie bars 113. The injection molding unit 110 performs injection molding of the preform 200 by filling an injection space formed by the core mold 111 and the cavity mold 112 with a resin material (raw material) from an injection device (not illustrated).

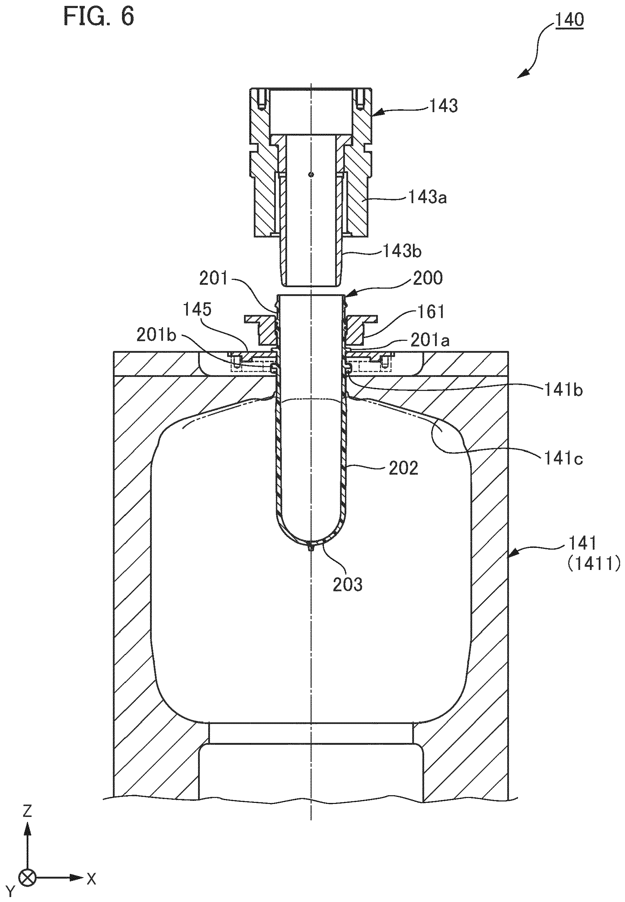

Here, as illustrated in Fig. 6 and the like, the entire shape of the preform 200 is a bottomed cylindrical shape in which one end side is opened and the other end side is closed. The preform 200 includes a neck part 201 that is formed on one end side and has an opening, a body part 202 that is connected to the neck part 201 and formed in a cylindrical shape, and a bottom part 203 that is connected to the body part 202 and closes the other end side. In addition, two annular flanges 201a and 201b are formed on the outer peripheral surface in the vicinity of the neck part 201 of the preform 200. The two flanges 201a and 201b are formed in parallel with an interval in the axial direction on the lower side of the neck part 201. In the following description, the upper flange of the preform is also referred to as a first flange 201a, and the lower (or lowermost) flange is also referred to as a second flange 201b.

The injection molding unit 110 of the present embodiment is configured to simultaneously mold, for example, 3 rows × 4 preforms 200 or 3 rows × 3 preforms 200. In addition, the preform 200 is molded in an upright state with the neck part 201 facing upward in the injection molding unit 110, and the preform 200 is conveyed in the upright state in the injection molding unit 110.

As illustrated in Fig. 2, the injection molding unit 110 further includes a receiving unit 115 that takes out the injection molded preform 200 to the outside of the injection molding unit 110.

The receiving unit 115 is configured to be movable in the horizontal direction (X direction in the drawing) to a delivery position on the outer side of the receiving position (space surrounded by the tie bar 113) on the lower side of the core mold 111.

The receiving unit 115 holds 12 cooling pots 119 that respectively accommodate 3 rows × 4 preforms 200 (or 3 rows × 3 preforms 200) molded by the injection molding unit 110. The cooling pot 119 of the receiving unit 115 cools the preform 200 by coming into contact with the accommodated preform 200. In addition, the receiving unit 115 converts the interval (interval in the X direction in the drawing) between the rows of the preform 200 from the wide pitch state of the receiving position to the narrow pitch state of the delivery position.

The preform 200 injection molded by the injection molding unit 110 is supplied from the injection molding unit 110 to the cooling unit 120. The cooling unit 120 forcibly cools the preform 200 molded by the injection molding unit 110. The preform 200 is carried out from the cooling unit 120 in a state of being cooled to a predetermined temperature, and is continuously conveyed along the conveyance line 151.

As illustrated in Fig. 2, a conveying device 180 that conveys the preform 200 from the receiving unit 115 to the cooling unit 120 in an upright state is provided between the injection molding unit 110 and the cooling unit 120. The conveying device 180 includes a holding portion 181 that holds the neck part 201 of the preform 200 in the upright state, and is configured to be able to move the holding portion 181 in the perpendicular direction (Z direction in the drawing) and the horizontal direction (X direction in the drawing) by an air cylinder (not illustrated).

The cooling unit 120 is invertible about a rotation axis extending in the X direction in the drawing, and is configured to be movable up and down in the Z direction (vertical direction) in the drawing. The cooling pots for accommodating 3 rows × 4 preforms 200 are arranged on a first surface 120a illustrated on the upper side in the drawing of the cooling unit 120 and a second surface 120b facing the first surface 120a.

The cooling pots arranged on the first surface 120a and the second surface 120b of the cooling unit 120 are cooled by the refrigerant circulating through the refrigerant passage (not illustrated), and suck and hold the accommodated preform 200.

The cooling unit 120 inverts the preform 200 in the upright state received from the conveying device 180 to an inverted state in which the neck part 201 faces downward during the cooling time. Then, the preform 200 in the inverted state is delivered to the conveyance jig 152 of the continuous conveyance unit 150 arranged in a plurality of rows below the cooling unit 120. The conveyance jig 152 holding the preform 200 is sequentially conveyed along the conveyance line 151 by driving of the sprocket 154 and the like.

The heating unit 130 includes a plurality of heaters (not illustrated) arranged along the conveyance line 151, and heats the preform 200 in an inverted state continuously conveyed by the continuous conveyance unit 150 to an appropriate stretching temperature. In the heating unit 130, the preform 200 in an inverted state is heated while rotating about the axial direction of the preform 200, whereby the entire preform 200 is uniformly heated. The heating unit 130 is configured to be able to simultaneously heat, for example, at least one injection molding (e.g., 3 × 4 or 3 × 3) preforms 200.

Furthermore, the blow-molding apparatus 100 includes an intermittent conveyance unit 160 and a delivery unit 170 on the downstream side of the heating unit 130 in the conveyance line 151.

The intermittent conveyance unit 160 holds the plurality of preforms 200 heated by the heating unit 130 and intermittently conveys the preforms to the blow-molding unit 140. The delivery unit 170 delivers the preform 200 continuously conveyed by the continuous conveyance unit 150 from the conveyance line 151 to the intermittent conveyance unit 160.

In the present embodiment, the plurality of conveyance jigs 152 continuous in the conveying direction are coupled by a coupling member (not illustrated). Then, the continuous conveyance unit 150 repeats driving and stopping of the sprocket 154a on the conveyance line 151 on the downstream side of the curved conveyance unit 155 curved at a predetermined radius, thereby supplying a plurality of preforms 200 to the delivery unit 170 at one time.

The delivery unit 170 includes an inverting device (not illustrated) at delivery position P0. The preform 200 conveyed in the inverted state along the conveyance line 151 is inverted by an inverting device arranged on the upper side of the preform 200 at the delivery position P0 to be in the upright state. In addition, the delivery unit 170 includes, for example, a lifting and lowering device (not illustrated) that lifts and lowers the inverting device, and delivers the preform 200 in the upright state to the intermittent conveyance unit 160 in a state of being lifted to a predetermined position (delivery position P1).

The intermittent conveyance unit 160 grips the neck part 201 of each preform 200 in the upright state with an openable/closable conveyance chuck 161 (not illustrated in Fig. 1). Then, the conveyance chuck 161 of the intermittent conveyance unit 160 grips the neck part 201 of the preform 200 at the delivery position P1 located above the delivery position P0, and moves the preform 200 from the delivery position P1 to the blow-molding position P2. As a result, the plurality of preforms 200 are conveyed to the blow-molding unit 140 at predetermined intervals.

The blow-molding unit 140 performs stretch blow-molding on a predetermined number of preforms 200 temperature-controlled by the heating unit 130 and received from the delivery unit 170 to manufacture the container 300.

The blow-molding unit 140 includes a blow-mold unit 140a. The blow-mold unit 140a includes at least a blow cavity mold 141 (cavity mold) including a pair of blow cavity split molds 1411 and 1412, a bottom mold 142, and a pair of blow-mold fixing plates 149 (1491, 1492) coupled to a mold opening/closing mechanism 144 to be described later. The blow-mold unit 140a further includes a blow core mold 143 which is an air introducing member. Since a plurality of (e.g., three or four) blow cavity split molds 1411 (1412) are fixed to one blow-mold fixing plate 1491 (1492), a plurality of (e.g., three or four) blow cavity molds 141 are provided in the pair of blow-mold fixing plates 149.

The bottom mold 142 includes the same number (e.g., three or four) of bottom part cavity molds 1421 as the number of the blow cavity molds 141, and a bottom mold fixing plate 1422 for fixing them. The blow cavity mold 141 and the bottom mold 142 are arranged in a line between the pair of blow-mold fixing plates 149. Each of the mold components configuring the blow-mold unit 140a can be carried in or out of the blow-molding apparatus 100 at the same time, and can be replaced at one time. The blow-molding unit 140 includes an opening/closing mechanism 144 that opens/closes the blow cavity mold 141, a first lifting and lowering device (not illustrated) that moves the bottom mold 142 up and down, and a second lifting and lowering device (not illustrated) that moves the blow core mold 143 up and down.

The blow cavity mold 141 is a mold that defines the shape of the container 300 excluding the bottom part 304. The blow cavity mold 141 is divided by a parting surface along a depth direction (Z direction) in the plane of drawing of Fig. 1, and is configured to be openable and closable in a vertical direction (Y direction) in Fig. 1 through a blow-mold fixing plate 149 by driving of the opening/closing mechanism 144.

A cylindrical opening portion 141a is formed in an upper portion (or upper surface) of the blow cavity mold 141 (or the blow cavity split molds 1411 and 1412). The opening portion 141a communicates with the inside of the mold and has a shape corresponding to the outer diameter of the neck part 201 of the preform 200 (or larger than the minimum diameter of the neck part 201 of the preform 200).

An annular receiving groove (groove portion) 141b that receives the second flange 201b of the preform 200 is formed on the inner peripheral surface of the opening portion 141a. The groove width (or the length of the groove in the Z direction) of the receiving groove 141b is formed to have a dimension larger than the width of the second flange 201b so as to allow the movement in which the position of the second flange 201b descends. Furthermore, a concave portion 141d for accommodating a lower portion of the neck part 201 located on the lower side than the first flange 201a of the preform 200 is formed in the vertical direction (non-Z direction) on the inner peripheral surface of the opening portion 141a.

Therefore, by arranging the preform 200 in accordance with the opening portion 141a of the blow cavity mold 141, the body part 202 and the bottom part 203 of the preform 200 can be arranged on the inner side of the blow cavity mold 141 in a state where the neck part 201 and the first flange 201a of the preform 200 are exposed to the outer side of the blow cavity mold 141 as illustrated in Fig. 6 and the like. An undercut part 141c corresponding to the convex rib 305 is formed on a mold surface corresponding to a container shoulder part of the blow cavity mold 141 (or the blow cavity split molds 1411 and 1412).

A pair of flat plate-shaped supporting members 145 is provided on the upper surface of the blow cavity mold 141. One supporting member 145 is provided in each blow cavity mold 141 (blow cavity split mold 1411 and 1412), and has a neck supporting portion 145a cut out in a semicircular shape corresponding to the outer diameter of the neck part of the preform 200. The pair of supporting members 145 is disposed such that the neck supporting portions 145a face each other inward.

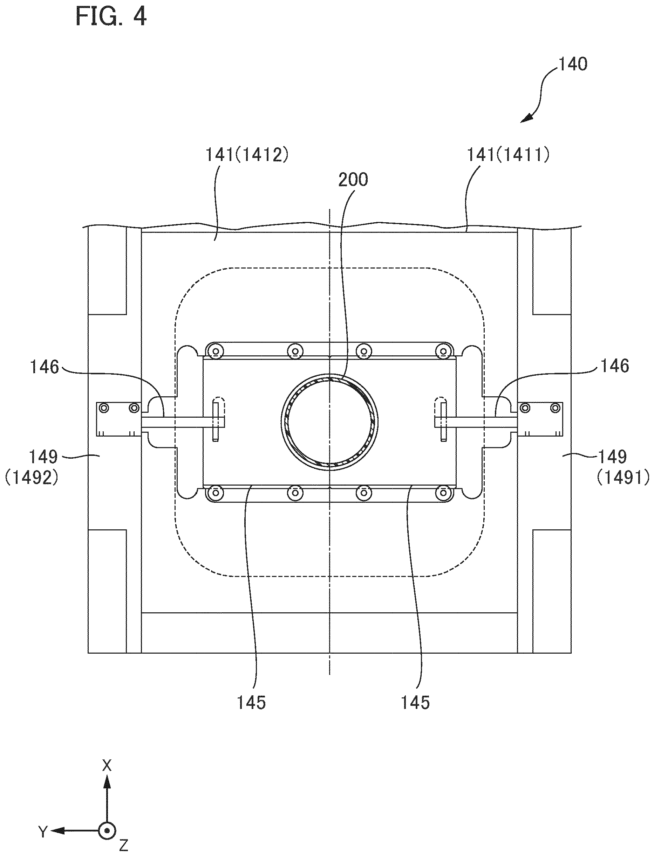

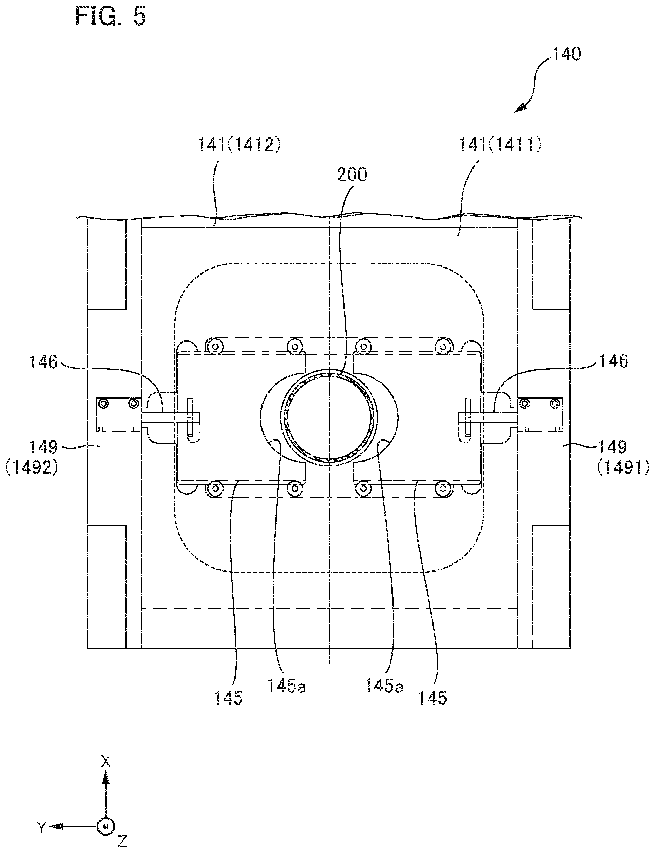

The supporting member 145 slides in the Y direction along the upper surface of the blow cavity mold 141 by the linear motion mechanism 146 provided in the blow cavity mold 141 or the blow-mold fixing plate 149, and can be opened and closed independently of the opening/closing operation of the blow cavity mold 141. Fig. 4 is a plan view illustrating the supporting member 145 in the closed position, and Fig. 5 is a plan view illustrating the supporting member 145 in the open position.

As illustrated in Fig. 4, when the supporting member 145 is at the closed position, the supporting members 145 are brought close with each other toward the parting surface. As a result, the neck supporting portions 145a at the closed position are at a position substantially overlapping the opening portion 141a of the blow cavity mold 141 in plan view, and can sandwich and support the preform 200 from both sides by the neck supporting portions 145a of the supporting members 145. The neck supporting portion 145a of the supporting member 145 has an upper surface side in contact with the lower surface of the first flange 201a, and supports the preform 200 on the lower side of the first flange 201a.

As illustrated in Fig. 5, when the supporting members 145 are at the open position, the supporting members 145 slides so as to separate from each other from the closed position. As a result, the neck supporting portion 145a at the open position is at a position retracted from the opening portion 141a of the blow cavity mold 141, and is in a state the support of the preform 200 by the supporting member 145 is released.

The bottom mold 142 is a mold that is disposed on the lower side of the blow cavity mold 141 and that defines the shape of the bottom part 304 of the container 300 (more specifically, the shape of the bottom part 304 is defined by the bottom part cavity mold 1421). When the bottom mold 142 and the blow cavity mold 141 are closed, a mold space defining the shape of the container 300 is formed.

The blow core mold 143 is a mold to be inserted into the neck part 201 of the preform 200 in order to shape the container 300 by introducing compressed air (blow air) into the preform. The blow core mold 143 is configured to be capable of moving forward and backward along the axial direction of the preform 200, and has a structure in which a tubular outer core 143a and a tubular inner core 143b are concentrically arranged.

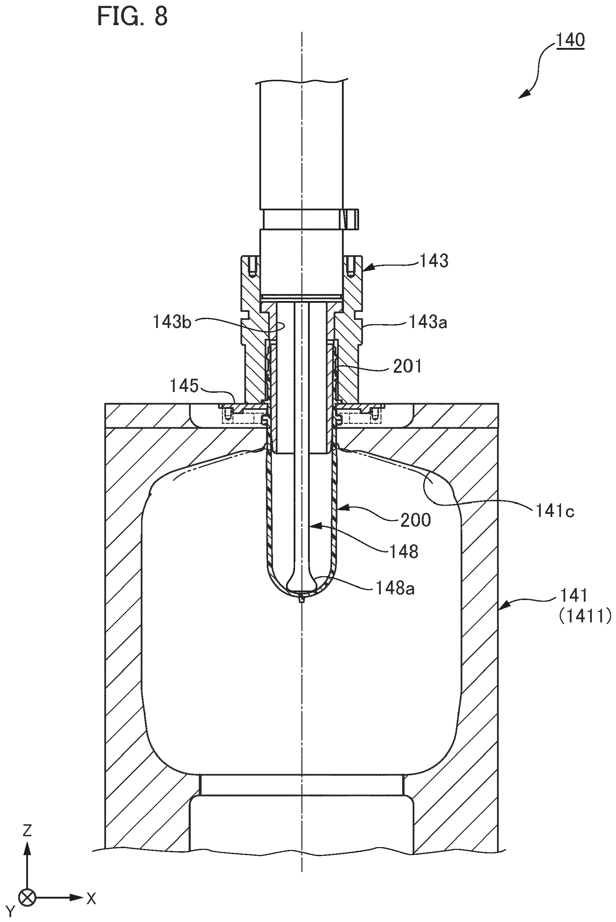

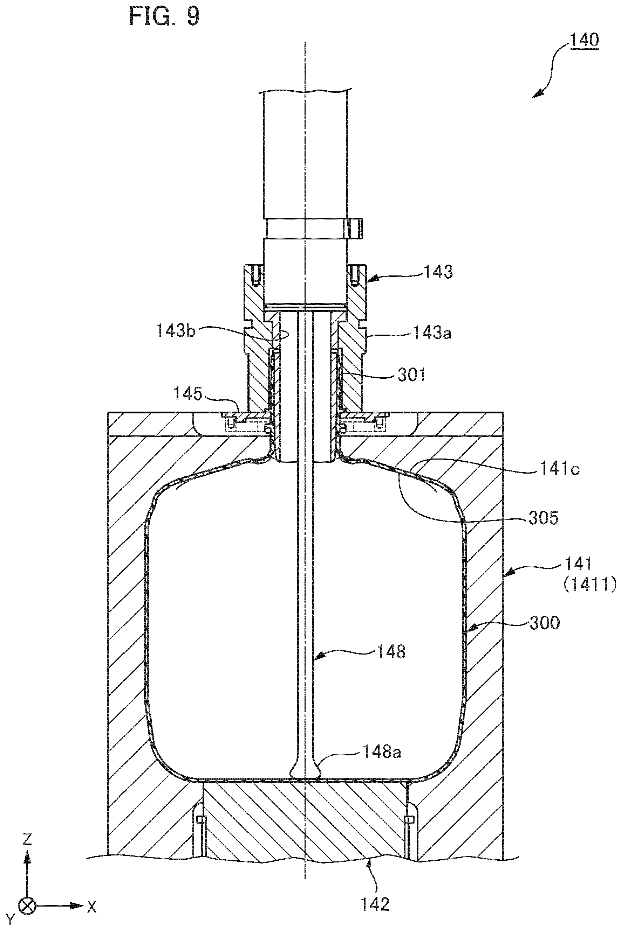

The outer core 143a is disposed on the outer peripheral side of the neck part 201 of the preform 200, and covers the neck part 201 of the preform 200 from the outer peripheral side at the time of blow-molding, as illustrated in Figs. 8 and 9 to be described later. As a result, the outer core 143a abuts on the upper surface of the first flange 201a and the upper surfaces of the supporting members 145 to ensure airtightness between the preform 200 and the blow core mold 143.

The inner core 143b is inserted into the preform 200 and is brought close to the inner peripheral surface of the neck part 201. In the blow core mold 143, the inner core 143b protrudes downward in the axial direction from the outer core 143a. The inner core 143b has a function of supporting the neck part 201 of the preform 200 (or the neck part 301 of the container 300) from the inner peripheral side, and suppressing tilt and positional displacement of the neck parts 201 and 301.

As illustrated in Figs. 8 and 9 described later, the inner core 143b and a stretching rod 148 are inserted into the preform 200 at the time of blow-molding. The inner core 143b is a hollow tubular body, and the stretching rod 148 is disposed on the inner side thereof, and a flow path for introducing compressed air into the preform 200 from, for example, a compressor (not illustrated) and discharging the compressed air from the container after blow-molding is formed.

The stretching rod 148 is configured to be capable of moving forward and backward in the vertical direction in the drawing with respect to the blow core mold 143. In addition, a contact portion 148a that comes into contact with the inner bottom surface of the preform 200 and prevents misalignment at the time of stretching is provided at the tip of the stretching rod 148.

Hereinafter, an operation example in the blow-molding step in the blow-molding unit 140 will be described with reference to Figs. 6 to 11.

First, in a state where the blow core mold 143 is waiting at the upper end position, the preform 200 is conveyed to the position of the opening portion 141a of the blow cavity mold 141 in the mold open state by the conveyance chuck 161 of the intermittent conveyance unit 160. Thereafter, the blow cavity mold 141 is moved in the Y direction by the driving of the opening/closing mechanism 144, and is changed from the mold open state to the mold closed state. In addition, each supporting member 145 is at the closed position in advance. When the blow cavity mold 141 is changed from the mold open state to the mold closed state, the neck supporting portion 145a of the supporting member 145 is arranged on the lower side of the preform 200 with the movement of the blow cavity mold 141.

As a result, as illustrated in Fig. 6, while the neck part 201 of the preform 200 is held by the conveyance chuck 161, the body part 202 and the bottom part 203 of the preform 200 are accommodated in the blow cavity mold 141. In addition, the supporting member 145 prevents the preform 200 from falling into the blow cavity mold 141. Note that at the stage of Fig. 6, the blow core mold 143 is retracted to above the preform 200, and the bottom mold 142 is retracted to below the blow cavity mold 141.

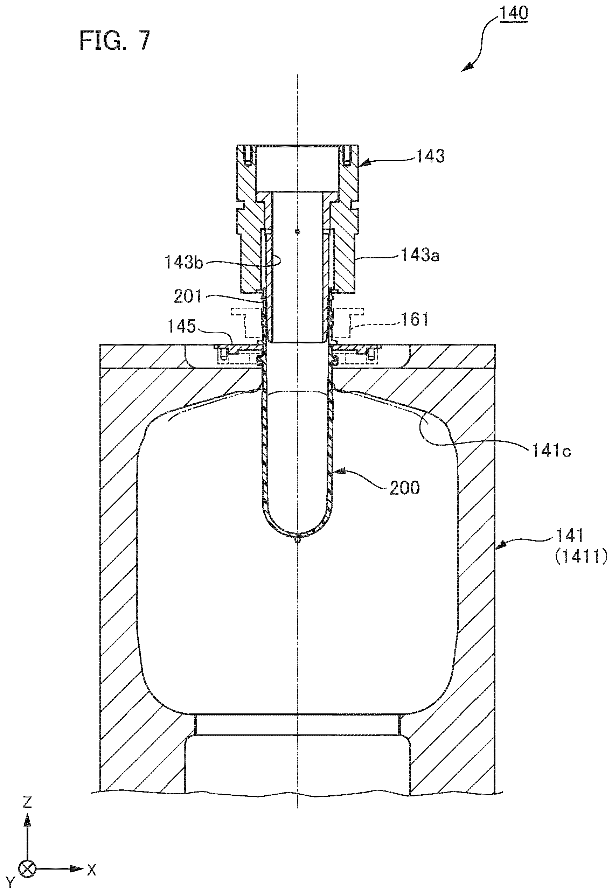

Next, as illustrated in Fig. 7, the blow core mold 143 is descended to the intermediate position, and the inner core 143b is inserted into the preform 200 to the position of the conveyance chuck 161 while the conveyance chucks 161 hold the neck part 201 of the preform 200. Thereafter, when the conveyance chuck 161 is retracted, the blow core mold 143 is further descended to the lower end position, and the tip of the outer core 143a comes into contact with the upper surface of the first flange 201a and/or the upper surface of the supporting member 145 (see Fig. 8). When the conveyance chuck 161 is retracted, the preform 200 is descended and placed on the upper surface of the supporting member 145, but is held from the inner side by the inner core 143b, so that it can suppress the preform 200 from taking an incorrect posture (e.g., a tilted posture).

Next, as illustrated in Fig. 8, the stretching rod 148 is inserted into the preform 200. Thereafter, the stretching rod 148 is descended and the tip (abutting portion 148a) thereof is pressed against the bottom part 203 of the preform 200, so that the preform 200 is longitudinally stretched.

The preform 200 is laterally stretched by supplying the blow air from the inner core 143b. As a result, as illustrated in Fig. 9, the preform 200 is bulged out and shaped so as to be in close contact with the mold surface of the blow cavity mold 141, and is blow-molded to the container 300. Note that the bottom mold 142 is controlled to wait at a position on the lower side not in contact with the bottom part 203 of the preform 200 before the mold is closed, and to quickly rise to the molding position before the start of blow-molding after the mold is closed.

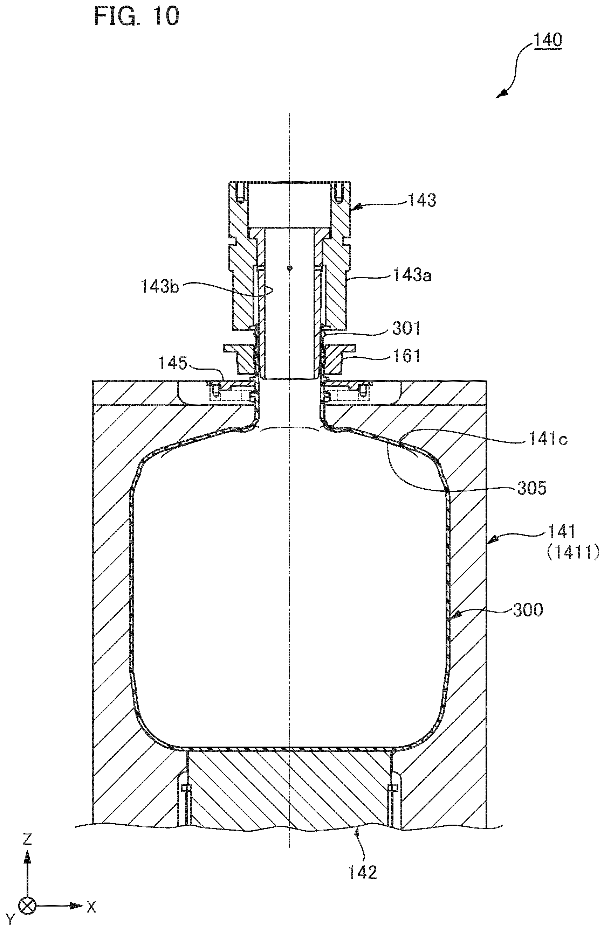

Next, as illustrated in Fig. 10, the stretching rod 148 retracts upward, and the blow core mold 143 is raised to the intermediate position. As a result, the outer periphery of the neck part 301 of the container 300 is exposed to the outer side, and the inner core 143b is partially inserted to the inner side of the neck part of the container 300. Thereafter, the conveyance chuck 161 again grips the outer periphery of the portion of the neck part 301 of the container 300 into which the inner core 143b is inserted.

Here, the conveyance chuck 161 grips the neck part 301 so that the container 300 can be moved downward by a movement margin described later. In addition, the conveyance chuck 161 has a retaining portion 161a protruding to the inner peripheral side on the lower end side. The retaining portion 161a suppresses the container 300 from falling off to the lower side by interfering with a protrusion (e.g., a screw thread) of the neck part 301.

In addition, since the inner core 143b is inserted into the neck part 301 of the container 300, the inner periphery of the neck part of the container 300 can come into contact with the outer peripheral surface of the inner core 143b, and the movement in the horizontal direction (XY direction) is restricted. The outer periphery of the neck part of the container 300 is gripped from the outer side by the conveyance chuck 161. Therefore, the neck part 301 of the container 300 is sandwiched between the inner core 143b on the inner peripheral side and the conveyance chuck 161 on the outer peripheral side. As a result, the neck part 301 of the container 300 is less likely to be displaced with respect to a force from a plane direction (XY direction) orthogonal to the axial direction of the container 300 (i.e., the neck part 301 is less likely to tilt).

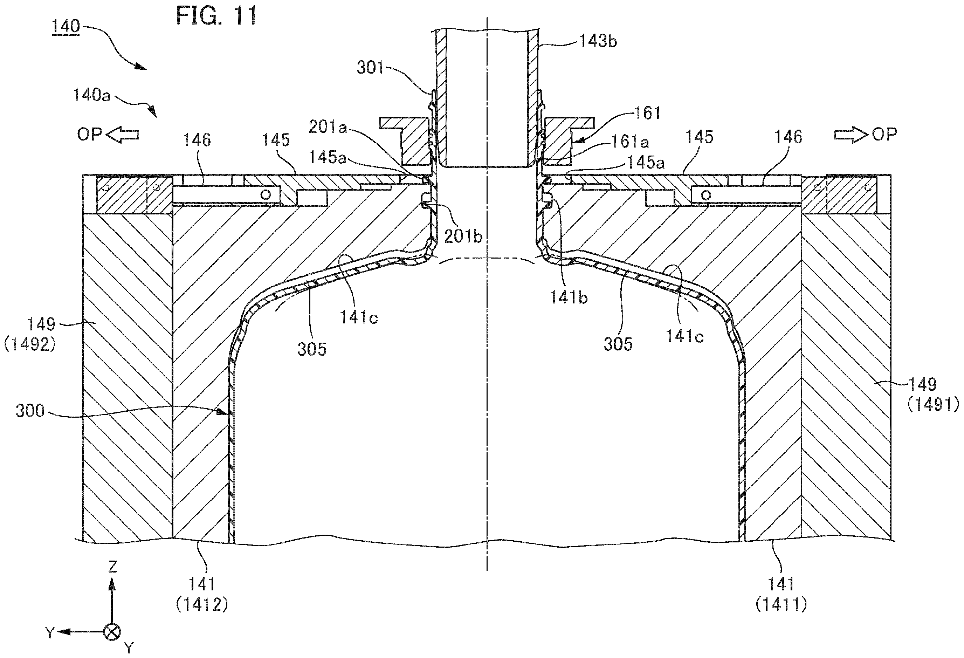

Thereafter, as illustrated in Fig. 11, the supporting members 145 of the blow cavity mold 141 slide from the closed position to the open position. As a result, the support of the container 300 by the supporting member 145 is released. Furthermore, a gap (movement margin) corresponding to the thickness of the retracted supporting member 145 is formed between the lower side of the first flange 201a and the blow cavity mold 141.

Here, the conveyance chuck 161 allows the container 300 to move downward, and the receiving groove 141b of the blow cavity mold 141 also allows the position of the second flange 201b to descend. Therefore, the container 300 gripped by the conveyance chuck 161 can be descended by the movement margin. In addition, the blow-molded container 300 contracts after shaping with air exhaustion and temperature fall, and a gap is generated to some extent on the bottom part side of the container 300. Therefore, even if the container 300 is descended by the movement margin, interference with the container 300 does not occur on the bottom surface side of the blow cavity mold 141.

As described above, when the supporting member 145 slides to the open position, the container 300 can be descended by the movement margin. When the container 300 is descended, the convex rib 305 of the container 300 is separated from the undercut part 141c.

On the other hand, the conveyance chuck 161 has a retaining portion 161a that allows descending of the container 300 but suppresses falling off of the container 300. When the container 300 is descended before the mold is opened, the first flange 201a comes into contact with the upper surface of the blow cavity mold 141, the second flange 201b comes into contact with the receiving groove 141b, and the container 300 does not descend any further. Therefore, falling off of the container 300 to the lower side is suppressed by the retaining portion 161a, the first flange 201a, and the second flange 201b.

After each of the supporting members 145 slides to the open position, the blow cavity mold 141 is moved in the Y direction by the driving of the opening/closing mechanism 144 to open the mold, as indicated by an arrow OP in Fig. 11.

The mold surface of the blow cavity mold 141 has an undercut part 141c corresponding to the convex rib 305, and the convex rib 305 of the container 300 enters the undercut part 141c when the mold is closed. When the blow cavity mold 141 is opened in this state, the convex rib 305 is forcibly removed from the undercut part 141c. However, as described above, the neck part 301 of the container 300 is sandwiched and supported between the inner core 143b on the inner peripheral side and the conveyance chuck 161 on the outer peripheral side, and movement in the XY directions is restricted. Therefore, when the convex rib 305 is released by the opening of the mold, the neck part 301 of the container 300 supported by the inner core 143b and the conveyance chuck 161 becomes a large resistance with respect to the force in the mold opening direction and receives a reaction force, so that the container 300 can be pulled off and released from the blow cavity mold 141. Therefore, an event in which the container 300 cannot be carried out without being released from the blow cavity mold 141 is suppressed.

Furthermore, when the supporting member 145 slides to the open position, the container 300 is descended by the movement margin, and the convex rib 305 of the container 300 is separated from the mold surface of the undercut part 141c as described above. This disables forced removal of the convex rib 305, and the container 300 can be more easily released from the blow cavity mold 141.

Note that in a state where the supporting member 145 is moved to the open position, the container 300 may not be sufficiently descended. However, when the mold is opened, the convex rib 305 contacts the mold surface of the blow cavity mold 141, so that vibration in the vertical direction or the horizontal direction is applied to the container 300. As a result, the container 300 is descended by an amount corresponding to the movement margin with the vibration, and the convex rib 305 of the container 300 is separated from the mold surface of the undercut part 141c. Therefore, even in this case, it is possible to disable forced removal of the convex rib 305.

In addition, the conveyance chuck 161 allows the container 300 to descend by vibration, but has the retaining portion 161a, and thus, an event in which the container 300 falls off downward and cannot be carried out due to vibration is suppressed.

In addition, since the neck part 301 of the container 300 is sandwiched between the inner core 143b and the conveyance chuck 161, the container 300 released from the blow cavity mold 141 is less likely to be shaken in a plane direction (XY direction) orthogonal to the axial direction. Therefore, the container 300 is also suppressed from coming into contact with the blow cavity mold 141 and falling off after the opening of the mold.

Thereafter, the blow core mold 143 is retracted upward, and the inner core 143b is pulled out from the neck part 301 of the container 300. Then, the container 300 is conveyed to the take-out position P3 outside the blow-molding unit 140 by the conveyance chuck 161 and taken out. The description of the blow-molding step in the blow-molding unit 140 ends.

As described above, in the blow-molding unit 140 of the blow-molding apparatus 100 of the present embodiment, the container 300 having the convex rib 305 of the undercut shape is manufactured. In the blow-molding unit 140, the preform 200 is accommodated in the blow cavity mold 141 having the undercut part 141c, and the blow core mold 143 is inserted to the inner side of the preform 200. Then, blow air is introduced into the preform 200 through the blow core mold 143, and the preform 200 is blow-molded into the container 300. Thereafter, the neck part 301 of the container 300 in which the blow core mold 143 is disposed on the inner side is gripped by the conveyance chuck 161 from the outer side, and the neck part 301 of the container 300 is sandwiched between the blow core mold 143 and the conveyance chuck 161. When the blow cavity mold 141 is opened, the container 300 in which the neck part 301 is sandwiched by the blow core mold 143 and the conveyance chuck 161 is released from the undercut part 141c.

In the blow-molding unit 140, since the container 300 is released with the neck part 301 sandwiched between the blow core mold 143 and the conveyance chuck 161, the container 300 having the convex rib 305 of an undercut shape can be easily released from the blow cavity mold 141. In addition, since the container 300 in which the neck part 301 is sandwiched between the blow core mold 143 and the conveyance chuck 161 is less likely to be shaken, the container is less likely to fall off the conveyance chuck 161. Therefore, according to the configuration of the present embodiment, the container 300 can be appropriately carried out from the blow-molding unit 140. In addition, in the configuration of the present embodiment, since it is not necessary to use a split mold having a movable insert, the manufacturing cost of the mold can be suppressed.

In addition, since the container 300 is released from the blow cavity mold 141 without forced removal, friction between the lower surface of the second flange 201b of the neck part 301 and the receiving groove portion 141b of the blow-mold 143 (or the lower surface of the first flange 201a and the upper surface of the blow-mold 143) can be reduced or eliminated. Therefore, even in a 1.5 step type or two-step type blow-molding apparatus that performs blow-molding on a container in a state where a part of the neck part 301 of the preform 200 is held by the blow cavity mold 141, the occurrence of scratches on the protrusion (support ring, annular flange, or the like) of the neck part 301 can be suppressed.

The present invention is not limited to the above embodiments, and various improvements and design changes may be made within a scope not deviating from the gist of the present invention.

For example, in the above embodiment, the configuration example of the blow-molding unit in the 1.5 step type blow-molding apparatus has been described by way of an example. However, the configuration of the blow-molding unit of the present embodiment may be applied to a cold parison type (two-step type) blow-molding apparatus that performs blow-molding using a preform that has been injection molded by another apparatus and cooled to normal temperature.

The shape of the container to which the present invention can be applied is not limited to the embodiment, and can be widely applied when a container having an undercut shape is manufactured by stretch blow-molding.

### (First modified example)

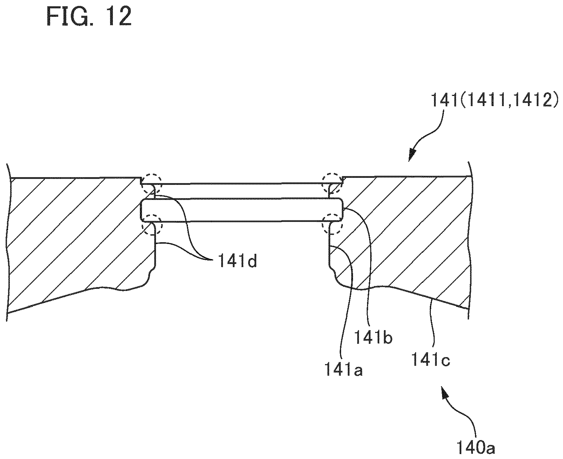

Fig. 12 is a diagram illustrating a configuration example of a blow-molding unit 140 according to a first modified example. In the following description, the same reference numerals are denoted to elements common to the blow-molding unit 140 of the embodiment, and redundant description will be omitted. Note that the first modified example has the same configuration as the embodiment except for the presence or absence of the blow cavity mold 141 (or the blow cavity split mold 1411 and 1412,) and the movement margin.

Unlike the embodiment, when the container 300 having the convex rib 305 is forcibly removed from the blow cavity mold 141, the second flange 201b on the lower side of the neck part 301 interferes with the receiving groove (groove portion) 141b of the blow cavity mold 141. The first flange 201a on the lower side of the neck part 301 also interferes with the upper surface of the blow cavity mold 141. More specifically, in the case of forced removal, the mold is opened while the entire container 300 is pushed downward by the undercut part 141c of the cavity mold 141, and thus the lower surface of the second flange 201b strongly comes into contact with the corner of the receiving groove 141b of the cavity mold 141 (specifically, the first corner formed between the lower end face of the receiving groove portion 141b and the concave portion 141d when the blow cavity split molds 1411 and 1412 are viewed from the parting surface side). As a result, the lower surface of the second flange 201b is rubbed, and uneven scratches may form on the lower surface of the second flange 201b.

Similarly, in the case of forced removal, the lower surface of the first flange 201a comes into strong contact with a corner of the upper surface of the cavity mold 141 (specifically, the second corner formed between the upper end faces of the blow cavity split molds 1411 and 1412 and the concave portion 141d when the blow cavity split molds 1411 and 1412 are viewed from the parting surface side). When scratches are formed on the lower surfaces of the second flange 201b and the first flange 201a, frictional resistance increases when the second flange 201b and the first flange 201a are supported by a rail member, a star wheel, or the like to transport container, and there is a possibility that the container 300 may get stuck and jammed during conveyance. In addition, the appearance of the container 300 itself is deteriorated due to the scratch.

In order to prevent scratches on the flange of the neck part 301 as described above, for example, as illustrated in Fig. 12, as a first modified example, a corner (a first corner region or/and a second corner region) of a portion abutting on the flange of the container 300 may be cut to have a curved surface shape by the parting surface of the blow cavity mold 141. Specifically, the corner of the upper end portion of the blow cavity mold 141 (specifically, the blow cavity split molds 1411 and 1412) through which the neck part 301 is inserted and the corner on the lower side of the receiving groove 141b are scraped to a curved surface shape (i.e., the corner is chamfered into a curved surface shape) at the parting surface of the blow cavity mold 141. The two corners described above are formed in each of the blow cavity split molds 1411 and 1412.

In order to further reduce scratches on the flange of the neck part 301, an edge portion on the upper surface side of the opening portion 141a (semicircular edge in top view formed between the lower end face of the counterbore into which the first flange 201a is fitted (placed) and the concave portion 141d) and an edge portion on the lower surface side of the receiving groove portion 141b (semicircular edge in top view formed between the lower end face of the receiving groove portion 141b and the concave portion 141d) may also be scraped into a curved surface shape. However, since there is a possibility that the positional displacement of the preform 200 with respect to the blow cavity mold 141 may become large, the chamfering dimension of the corner is preferably set to be larger than the chamfering dimension of the edge portion. The edge portion is formed in each of the blow cavity split molds 1411 and 1412.

For example, a corner at a portion indicated by a broken line in Fig. 12 is scraped (cut and chamfered) to form an equilateral triangular planar portion having one side of 0.7 mm to 0.9 mm, the scraped portion (planar portion) is polished so as to approach a hemispherical shape, and chamfering is finally performed so that the corner becomes a curved surface having a hemispherical surface shape. The edge portion may, for example, also be scraped (cut and chamfered) by 0.1 mm to 0.2 mm, and then the scraped portion may be polished so as to approach a fan shape (quadrant shape), and chamfering may be performed so as to be a fan-shaped curved surface. Furthermore, in the blow cavity mold 141 (specifically, the blow cavity split molds 1411 and 1412), the corners of the receiving groove portion 141b and the opening portion 141a may be chamfered into a curved surface shape, and the radius (radius of curvature, R or SR) of the roundness of the corner after the processing may be set to 0.8 mm to 1.5 mm (preferably 1.0 mm to 1.2 mm). Moreover, the edge portions of the receiving groove portion 141b and the opening portion 141a may also be chamfered, and the radius (radius of curvature, R) of the roundness of the edge portion after the processing may be set to 0.3 mm to 0.8 mm (preferably 0.4 mm to 0.6 mm).

According to the configuration of the first modified example, as in the embodiment, even in the case of forced removal, the lower surface of the flange of the neck part 301 is less likely to be scraped by the corner of the blow cavity mold 141, so that scratches are less likely to form on the lower surface of the flange.

### (Second modified example)

In addition, as another method of preventing scratches on the flange of the neck part 301, the supporting member 145 may be configured to receive the flange of the neck part 301 at the time of closing of the mold, and the supporting member 145 may be retracted from the periphery of the neck part 301 before the opening of the blow cavity mold 141.

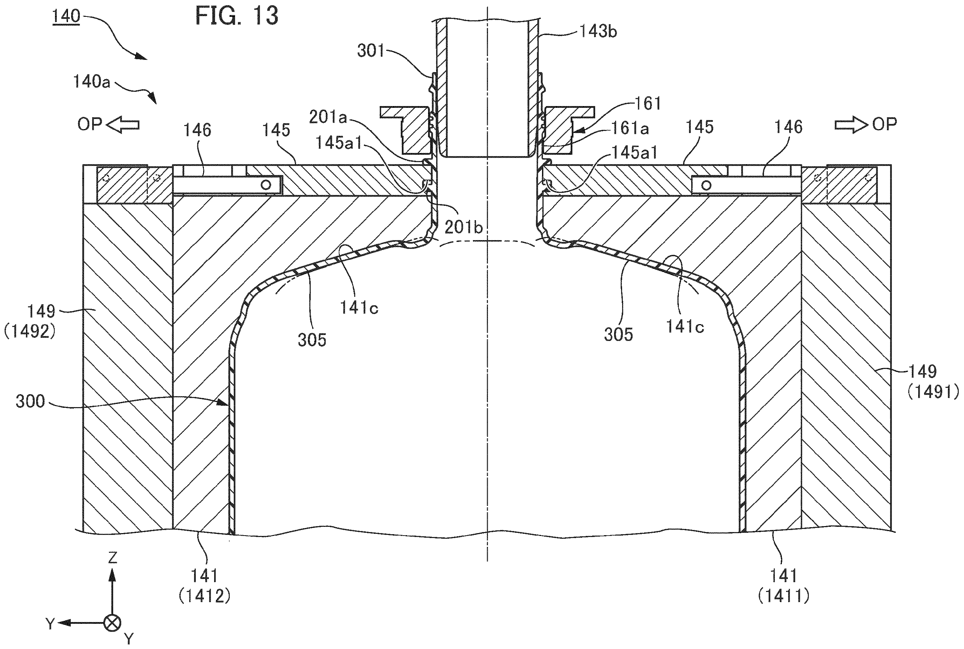

Fig. 13 is a diagram illustrating a configuration example of a blow-molding unit 140 according to a second modified example. In the following description, the same reference numerals are denoted to elements common to the blow-molding unit 140 of the embodiment, and redundant description will be omitted. Note that the second modified example has the same configuration as the embodiment except for the presence or absence of the blow cavity mold 141 (or the blow cavity split mold 1411 and 1412,) and the movement margin.

In the blow-molding unit 140 of the second modified example, the supporting member 145 is formed to be thicker in the Z direction than in the embodiment described above, and is configured to be able to support a portion including the second flange 201b of the neck part 301 (or the neck part 201) from both sides in the container height direction (Z direction). An annular receiving groove (groove portion) 145a1 that receives the second flange 201b of the neck part 301 is formed on the neck supporting portion 145a of the supporting member 145.

Fig. 13 illustrates a state where the pair of supporting members 145 is at the closed position. When the supporting members 145 are at the closed position, the supporting members 145 are brought close to each other toward the parting surface. At this closed position, the neck part 301 is supported by the supporting member 145 in a state where the second flange 201b is accommodated in the receiving groove 145a1 of the supporting member 145 and in a state where the first flange 201a is abutted on the upper surface of the supporting member 145.

In a second modified example, the supporting member 145 is at the closed position from the time point of closing the blow cavity mold 141, and is closed together with the blow cavity mold 141 to support the neck part 201 of the preform 200. Thereafter, when the blow-molding of the container 300 is completed and the container 300 is gripped by the conveyance chuck 161, the supporting member 145 slides in the Y direction (the direction of the arrow OP) by the operation of the linear motion mechanism 146 and moves to the open position.

As a result, the supporting member 145 is separated from the neck part 301, and the second flange 201b does not interfere with the receiving groove 145a1 of the supporting member 145. In addition, the first flange 201a does not interfere with the upper surface of the supporting member 145. That is, when the supporting member 145 moves to the open position, the first flange 201a and the second flange 201b form predetermined gap against the upper surface of the blow cavity mold 141, so that the first flange and the second flange do not come into contact with each other. Note that a movement margin that allows the container 300 to move in the axial direction (lower side in the Z direction) without the flange and the supporting member 145 coming into contact may be formed, or may not be formed. In a case where the movement margin is formed, the conveyance chuck 161 grips the neck part 301 so that the container 300 can move downward (so that the container 300 can descend the distance corresponding to the movement margin). In a case where the movement margin is not formed, the conveyance chuck 161 grips the neck part 301 so that the container 300 cannot be moved downward.

Thereafter, the blow cavity mold 141 is opened, and the convex rib 305 of the container 300 is separated from the undercut part 141c. At this time, the entire container 300 is pushed downward by the undercut part 141c of the cavity mold 141, but since the supporting member 145 is retracted from the neck part 301, there is no member that interferes with the lower surface of the second flange 201b. Therefore, according to the configuration of the second modified example as well, in addition to the effects similar to those of the above embodiment, it is possible to prevent the lower surface member of the flange from interfering and forming scratches when the mold of the container 300 having the convex rib 305 is opened. Furthermore, when the conveyance chuck 161 supports the container 300 so that the container 300 can moved downward, the advantages similar to those of the embodiment can be secured.

In addition, the embodiments disclosed herein are to be considered in all respects as illustrative and not restrictive. The scope of the present invention is indicated not by the above description but by the claims, and it is intended that meanings equivalent to the claims and all modifications within the scope are encompassed.

### Reference Signs List

100 blow-molding apparatus
110 injection molding unit
120 cooling unit
130 heating unit
140 blow-molding unit
141 blow cavity mold
141b receiving groove
141c undercut part
143 blow core mold
143a outer core
143b inner core
144 opening/closing mechanism
145 supporting member
147 inner tube
148 stretching rod
160 intermittent conveyance unit
161 Conveyance chuck
200 preform
201 neck part
201a, 201b flange
300 container
301 neck part
302 shoulder part
305 convex rib

## Claims

1. A method for manufacturing a resin container having an undercut shape, the method comprising the steps of:
accommodating a preform in a cavity mold having an undercut part;
inserting a core mold to an inner side of the preform;
introducing blow air into the preform through the core mold to blow-mold the preform into a container;
gripping a neck part of the container, in which the core mold is disposed on an inner side, with a conveyance chuck from an outer side and sandwiching the neck part of the container with the core mold and the conveyance chuck; and
opening the cavity mold; wherein
the container in which the neck part is sandwiched between the core mold and the conveyance chuck is released from the undercut part by the opening of the mold.

2. The method for manufacturing the resin container according to claim 1, wherein
the core mold includes an outer core that covers an outer periphery of the neck part at the time of the blow-molding and an inner core that is inserted into the neck part, and
the method further includes raising the outer core after the blow-molding and exposing an outer periphery of the neck part into which the inner core is inserted.

3. The method for manufacturing the resin container according to claim 1 or 2, wherein
the cavity mold includes a supporting member that supports the neck part and that is retractable from the neck part,
the method further includes retracting the supporting member from the neck part before the opening of the mold, to form a movement margin enabling the container to be movable in an axial direction, and
the container moves in the axial direction depending on the movement margin to separate from the undercut part.

4. The method for manufacturing the resin container according to claim 3, wherein
the conveyance chuck includes a retaining portion that protrudes toward an inner peripheral side to interfere with a protrusion of the neck part, and suppresses falling off of the container in the axial direction.

5. The method for manufacturing the resin container according to claim 3 or 4, wherein
the neck part includes a flange protruding in a radial direction, and
interference between the cavity mold and the flange suppresses the falling off of the container in the axial direction.

6. The method for manufacturing the resin container according to claim 1, wherein
the neck part includes a flange protruding in a radial direction, and
a corner abutting on a lower surface of the flange at a parting surface of the cavity mold is processed into a curved surface.

7. The method for manufacturing the resin container according to claim 1, wherein
the neck part includes a flange protruding in a radial direction,
the cavity mold includes a supporting member that accommodates the flange and supports the neck part when the mold is closed, and
the method further includes retracting the supporting member from the neck part before the opening of the mold to form a movement margin enabling the container to move in an axial direction without the flange and the supporting member coming into contact with each other.

8. The method for manufacturing the resin container according to any one of claims 1 to 7, wherein
the undercut shape is formed on a shoulder part of the container.

9. The method for manufacturing the resin container according to any one of claims 1 to 8, further comprising the steps of:
injection molding the preform; and
adjusting a temperature of the preform; wherein
the preform is subjected to blow-molding in a state of having a residual heat from the time of injection molding.

10. A manufacturing apparatus of a resin container having an undercut shape, the manufacturing apparatus comprising:
a cavity mold that accommodates a preform and has an undercut part;
a core mold inserted to an inner side of the preform;
a blow air introducing unit that introduces blow air into the preform through the core mold in order to blow-mold the preform into a container;
a conveyance chuck configured to grip a neck part of the container from an outer side; and
an opening/closing mechanism configured to open the cavity mold; wherein
a neck part of the container, in which the core mold is disposed on an inner side, is gripped with the conveyance chuck from an outer side, and the neck part of the container is sandwiched with the core mold and the conveyance chuck, and
the container in which the neck part is sandwiched between the core mold and the conveyance chuck is released from the undercut part by the opening of the mold.
